# FASCICULE DE BREVET EUROPEEN

(11) **EP 1 120 977 B1**
(45) Date de publication et mention de la délivrance du brevet: **10.03.2010**
(21) Numéro de dépôt: 01410005.1
(22) Date de dépôt: 24.01.2001
(51) Int. Cl.: H04N 7/50

(54) **Décodeur MPEG d'images de séquences multiples**
MPEG Dekoder von Bildern von mehreren Sequenzen
MPEG decoder of images of multiple sequences

(30) Priorité: 25.01.2000 FR 0000933
(43) Date de publication de la demande: 01.08.2001
(73) Titulaire: STMicroelectronics S.A., 92120 Montrouge (FR)
(72) Inventeur: Moutin, Jean-Michel, 38130 Echirolles (FR)
(74) Mandataire: de Beaumont, Michel

(56) Documents cités:
- EP-A- 0 881 835
- EP-A- 0 893 917
- US-A- 5 880 786

## Description

La présente invention concerne les circuits de décodage d'images codées selon la norme MPEG, et plus précisément un circuit de commande d'un décodeur MPEG susceptible de décoder une pluralité d'images en une durée réduite, par exemple une période de balayage vertical d'un écran de télévision, pour visualiser plusieurs chaînes de télévision à la fois.

La norme de codage MPEG permet de mémoriser les images d'une séquence d'images numériques dans un espace mémoire réduit, ou de transmettre ces images dans un canal de débit réduit. Une image codée doit être décodée avant de pouvoir être affichée, par exemple sur un écran de télévision.

US-A-5880786 illustre que le décodage des images est synchronisé avec le signal de balayage vertical d'écran.

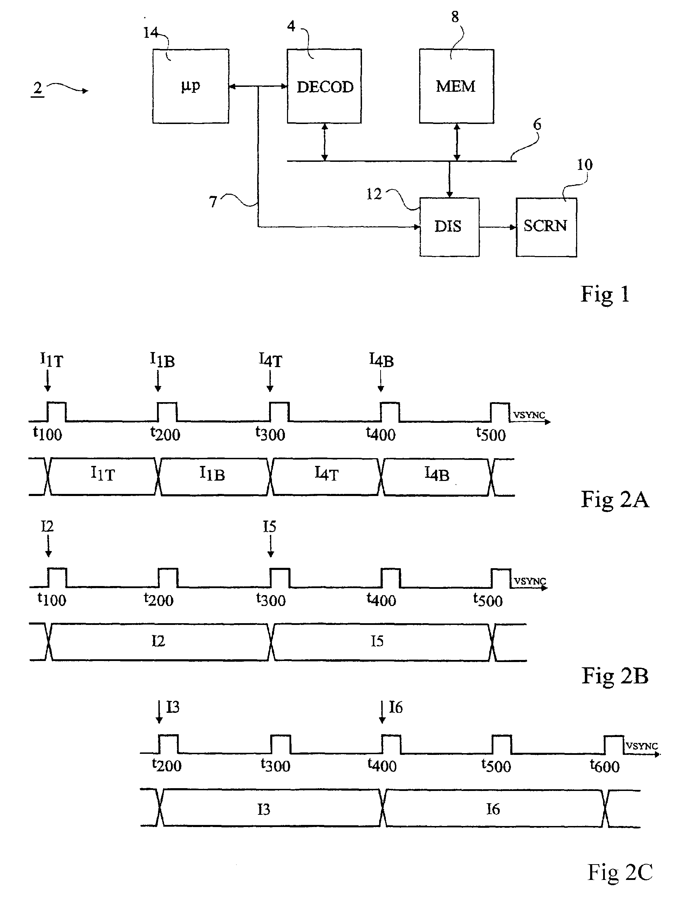

La figure 1 représente schématiquement sous forme de blocs les éléments principaux d'un dispositif 2 de décodage et d'affichage de séquences d'images numériques codées selon la norme MPEG. Ce dispositif comprend un décodeur (DECOD) 4 relié par l'intermédiaire d'un bus 6 à une mémoire (MEM) 8 dans laquelle sont stockées les images codées devant être décodées. Les images décodées par le décodeur sont stockées temporairement dans la mémoire 8, avant d'être fournies à un écran (SCRN) 10 relié au bus 6 par l'intermédiaire d'un dispositif de contrôle et de gestion d'affichage (DIS) 12. Le décodeur et le contrôleur d'affichage sont commandés par un circuit tel qu'un microprocesseur (µP) 14 connecté par l'intermédiaire d'un bus 7 de manière à fournir et recevoir des signaux de commande ainsi que des données. Le microprocesseur 14 donne notamment au décodeur les ordres de décodage des images codées stockées dans la mémoire 8. Classiquement, pour ordonner le décodage d'une image codée stockée dans une zone de la mémoire 8, le microprocesseur 14 fournit au décodeur 4 l'adresse du début de cette zone, et la commande de décodage de l'image à partir d'un instant donné. Le fonctionnement d'un tel circuit est bien connu de l'homme du métier et il ne sera pas détaillé plus avant.

Les systèmes de télévision analogiques existants proposent classiquement d'afficher plusieurs images à l'écran lors d'un même balayage de l'écran. Cela permet par exemple d'afficher une ou plusieurs images incrustées dans une image principale et de visualiser plusieurs chaînes de télévision simultanément. Il existe un besoin pour un dispositif de décodage d'images codées selon la norme MPEG permettant un tel affichage simultané, c'est-à-dire permettant de décoder une pluralité d'images en une période de balayage vertical d'un écran de télévision.

Le dispositif de la figure 1 permet de décoder et d'afficher les images d'une seule séquence d'image. Ainsi, une solution consiste à dupliquer ce dispositif autant de fois que l'on veut d'images décodées et affichées simultanément.

Il est classique dans un système de télévision de diviser une image en deux trames entrelacées et d'afficher chacune des deux trames lors de deux balayages verticaux successifs de l'écran. Selon la norme MPEG, une image peut être codée de trois manières différentes : soit sous la forme d'une image complète comprenant les deux trames entrelacées (image "frame"), soit sous la forme de deux demi-images dont chacune correspond à l'une des trames (images "field"), soit encore sous la forme d'une image complète non entrelacée (image "progressive"). La suite de la description ne traite que des images entrelacées des deux types, les images progressives pouvant, de manière connue, être traitées de la même manière que les demi-images entrelacées. Une même séquence d'images peut être composée d'images correspondant aux deux types de codage. Les différentes séquences d'images que l'on veut décoder et afficher simultanément peuvent également avoir des codages différents. Le décodage de chaque type d'image codée correspond à un fonctionnement particulier du décodeur 4.

La figure 2A illustre le décodage d'une séquence de deux images I₁ et I₄, codées chacune sous la forme de deux demi-images I_{1T} et I_{1B}, et I_{4T} et I_{4B} respectivement. La trame contenue dans chaque demi-image décodée doit être affichée en une période T_{VSYNC}, et une demi-image peut donc être décodée en une période T_{VSYNC}. Le décodeur 4 reçoit du microprocesseur 14 l'ordre de décoder les demi-images I_{1T}, I_{1B}, I_{4T}, I_{4B} respectivement à des instants t₁₀₀, t₂₀₀, t₃₀₀ et t₄₀₀ distants chacun d'une période T_{VSYNC}. Les décodages respectifs des demi-images I_{1T}, I_{1B}, I_{4T} et I_{4B} ont lieu dans la période T_{VSYNC} qui suit immédiatement l'ordre de les décoder. On notera que, pour assurer un bon fonctionnement du dispositif de décodage et d'affichage, il est souhaitable que le décodage d'une demi-image ne soit pas plus long qu'une durée maximale égale à une période T_{VSYNC} et ne déborde pas sur la période suivante.

La figure 2B illustre le décodage d'une séquence de deux images I₂ et I₅ codées sous forme d'images complètes. Les deux trames comprises dans une image complète décodée doivent être affichées lors de deux périodes T_{VSYNC} consécutives, et une image complète peut être décodée en deux périodes T_{VSYNC}. Le décodeur 4 reçoit du microprocesseur 14 l'ordre de décoder les images complètes I₂ et I₅ respectivement aux instants t₁₀₀ et t₃₀₀. Les décodages respectifs des images I₂ et I₅ ont lieu lors des deux périodes T_{VSYNC} successives qui suivent immédiatement l'ordre de les décoder. Dans ce cas également, il est souhaitable pour assurer un bon fonctionnement que le décodage ne déborde pas de la durée maximale, ici de deux périodes, qui lui est allouée. On notera que la mémoire 8 est une mémoire tampon qui ne contient que quelques images d'une séquence, qui sont écrites et lues en phase avec la réception de la séquence par le dispositif de décodage et d'affichage. Lorsque l'on considère plusieurs séquences d'images provenant de différentes sources, il est possible que ces séquences ne soient pas en phase, en terme de périodes T_{VSYNC}, et qu'elles doivent être décodées et affichées avec ce déphasage. Notamment, deux séquences d'images codées sous forme d'images complètes peuvent être décalées d'une période de balayage d'écran T_{VSYNC}.

La figure 2C illustre le décodage d'une séquence composée de deux images I₃ et I₆ codées sous forme d'images complètes dont l'ordre de décodage est donné au décodeur 4 avec un déphasage d'une période T_{VSYNC} par rapport à la séquence de la figure 2B. L'ordre de décoder les images I₃ et I₆ est donné au décodeur aux instants t₂₀₀ et t₄₀₀, et leurs décodages respectifs ont lieu lors des deux périodes T_{VSYNC} successives qui suivent immédiatement l'ordre de les décoder.

Si l'on considère un circuit permettant le décodage et l'affichage simultanés de trois séquences d'images telles que celles des figures précédentes, qui utilise trois dispositifs distincts tels que celui de la figure 1, chacun de ces dispositifs pourra décoder avec sa phase propre la séquence d'images qui lui est fournie. Un tel circuit fonctionne de manière satisfaisante, mais il présente de nombreux inconvénients. Notamment, il utilise trois décodeurs MPEG, qui sont des circuits de taille importante, encombrants et coûteux.

Un objet de la présente invention est de prévoir un tel dispositif de décodage de plusieurs images qui ne comporte qu'un seul circuit décodeur.

Pour atteindre cet objet, la présente invention prévoit notamment de munir ce dispositif d'un circuit de commande particulier pour gérer le décodage d'images de plusieurs séquences, de type de codage et de phase différents, au moyen d'un seul décodeur.

Notamment, la présente invention prévoit un circuit de commande d'un décodeur MPEG cadencé par un signal de période donnée de balayage vertical d'écran et susceptible de décoder plusieurs séquences d'images codées, recevant de ce circuit à chaque début de période une commande de décodage de plusieurs images d'un premier ou d'un second type, les images du second type pouvant être décodées à un instant quelconque de la période qui suit leur commande de décodage, et les images du premier type pouvant être décodées à un instant quelconque des deux périodes qui suivent leur commande de décodage, ce circuit comprenant un circuit d'attribution de priorité pour, à chaque période, donner parmi ces images la priorité de décodage, s'il en existe, d'abord aux images du premier type n'ayant toujours pas été décodées une période après leur commande de décodage et sinon, s'il en existe, aux images du second type.

Selon un mode de réalisation de la présente invention, le circuit de commande comprend en outre une mémoire de pointeurs destinée à stocker les adresses de départ de chacune des images devant être affichées.

Selon un mode de réalisation de la présente invention, le circuit de commande comprend en outre un circuit de sécurité pour ajouter un en-tête prédéterminé avant chaque image fournie au décodeur de manière que deux images mises bout-à-bout ne puissent pas former un code qui entraîne un dysfonctionnement du décodeur.

La présente invention vise également un circuit de décodage à commande intégrée comprenant un décodeur MPEG connecté à un tel circuit de commande.

La présente invention vise également un circuit de décodage et d'affichage d'images codées selon la norme MPEG, comprenant un tel circuit de décodage à commande intégrée relié de manière à lire des données codées et à écrire des données décodées dans une mémoire par l'intermédiaire d'un premier bus, un circuit de contrôle d'affichage connecté entre un écran et le premier bus, et un microprocesseur connecté à un second bus de manière à commander le circuit de décodage à commande intégrée et le circuit de contrôle d'affichage.

Selon un mode de réalisation de la présente invention, les images du premier type sont des images entrelacées complètes, et les images du second type sont des demi-images entrelacées.

Selon un mode de réalisation de la présente invention, les images du premier type sont des images entrelacées complètes, et les images du second type sont des demi-images entrelacées ou des images complètes non entrelacées.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente sous forme de blocs un dispositif selon l'art antérieur de décodage et d'affichage d'une séquence d'images codées selon la norme MPEG ;
les figures 2A, 2B, 2C, précédemment décrites, illustrent le décodage selon l'art antérieur de trois séquences d'images dont le type de codage et la phase sont différents ;
la figure 3 illustre, sous forme de blocs, un mode de réalisation d'un dispositif de décodage et d'affichage selon la présente invention ;
la figure 4 représente, sous forme de blocs, un mode de réalisation du circuit de commande de la figure 3 ;
les figures 5 et 6 illustrent le fonctionnement du circuit de la figure 3 ; et
la figure 7 représente, sous forme de blocs, un mode de réalisation du circuit de décodage à commande intégrée de la figure 3.

De mêmes références désignent de mêmes éléments aux différentes figures. Pour des raisons de clarté, seuls ont été représentés les éléments utiles à la compréhension de la présente invention.

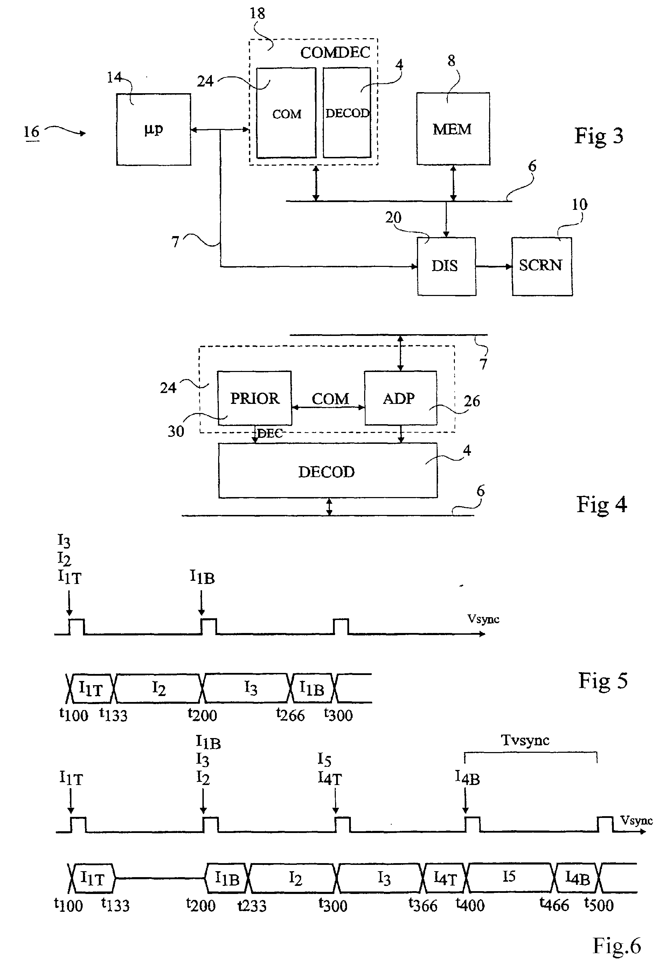

La figure 3 représente sous forme de blocs un dispositif 16 de décodage et d'affichage selon la présente invention, qui permet de traiter les images de plusieurs séquences distinctes, par exemple trois, en une période de balayage d'écran. Le dispositif 16 comprend un circuit de décodage à commande intégrée (COMDEC) 18 relié de manière à lire les données codées des trois séquences et à écrire les données décodées dans une mémoire 8 par l'intermédiaire d'un bus 6. Un circuit de contrôle d'affichage (DIS) 20 a sa sortie reliée à un écran 10. L'entrée du circuit 20 est connectée au bus 6 de manière à lire dans la mémoire 8 les images décodées des trois séquences et à les transmettre à l'écran 10. On notera que le circuit de contrôle d'affichage 20 est plus complexe que le circuit 12 de la figure 1, et qu'il est notamment capable d'accéder en mémoire aux données de plusieurs images et de les présenter de façon adéquate à l'écran. Comme en figure 1, l'ensemble du dispositif est piloté par un microprocesseur 14 par l'intermédiaire d'un bus 7. Le circuit de décodage à commande intégrée 18 comprend un circuit décodeur 4 identique au décodeur de la figure 1, et un circuit de commande (COM) 24 du circuit décodeur. On notera que, pour que le dispositif selon la présente invention fonctionne, il est nécessaire que le décodeur 4 fonctionne à une vitesse au moins trois fois supérieure à la vitesse décrite en relation avec les figures 2A à 2C, c'est-à-dire qu'il doit pouvoir décoder en deux périodes T_{VSYNC} trois images complètes ou six demi-images, ou toute combinaison équivalente. Cette condition est remplie par la plupart des décodeurs selon l'état de la technique, et elle ne constitue en pratique pas une limitation. L'ordre dans lequel ces images sont décodées au cours de ces deux périodes est particulièrement important et le circuit de commande 24 a pour fonction de déterminer quelles images doivent être décodées en priorité. Le circuit de commande 24 a également pour fonction d'assurer la compatibilité des données qui sont fournies au décodeur 4 avec la syntaxe MPEG.

La figure 4 représente sous forme de blocs un mode de réalisation du circuit de commande 24 selon la présente invention. Le circuit 24 comprend une mémoire de pointeurs d'adresse (ADP) 26, par exemple composée de registres, connectée au bus 7 pour recevoir du microprocesseur 14 les adresses (ou pointeurs) du début des zones de la mémoire 8 dans lesquelles sont stockées les images à décoder et les paramètres de décodage de ces images. Les paramètres de décodage servent notamment à identifier le type des images à décoder. Il existe autant de jeux de paramètres et de pointeurs mémoires que de séquences à décoder en parallèle. La mémoires 26 est connectée au décodeur 4 pour lui fournir les adresses (ou pointeurs) à partir desquelles le décodeur doit accéder à la mémoire 8, par l'intermédiaire du bus 6, pour effectuer sa tâche. Enfin, le circuit de commande 24 comprend un circuit d'attribution de priorité 30 connecté à la mémoire 26 de manière à recevoir les paramètres de décodage associés à chaque image à décoder. Le circuit 30 est en outre connecté au décodeur 4 de manière à commander au décodeur de lire dans la mémoire 8 des images désignées par les pointeurs des registres 26 avec un ordre de priorité qui va être décrit, et de manière à commander le circuit décodeur 4 pour qu'il décode les images fournies par la mémoire 8. On notera qu'une fois que les paramètres de décodage et le pointeur d'adresse ont été pris en compte par le circuit de commande, le contenu des registres du bloc 26 peut être renouvelé par une image suivante.

Le fonctionnement des circuits 4 et 24 est synchronisé sur la période de balayage vertical T_{VSYNC}, et un nouvel ordre de décodage peut être donné par le microprocesseur 14 à chaque période. A chaque nouvelle période T_{VSYNC}, le circuit 30 calcule un nouvel ordre de priorité de décodage des images dont le pointeur et les paramètres d'identification viennent d'être écrits dans la mémoire 26. En fonction du type de codage des images dont le pointeur se trouve dans la mémoire 26, et également de la durée depuis laquelle chaque pointeur s'y trouve, le circuit de gestion de priorité 30 attribue une priorité de décodage à chaque pointeur, puis il commande au décodeur 4 de décoder les images désignées par les pointeurs dont la priorité est la plus élevée. Selon la présente invention, la priorité de décodage la plus élevée est accordée aux images complètes dont le pointeur est présent dans la mémoire 26 depuis une durée supérieure à une période T_{VSYNC}, c'est-à-dire des images complètes dont l'ordre de décodage est vieux de plus d'une période T_{VSYNC}. Une priorité de décodage plus faible est donnée aux demi-images, et la priorité de décodage la plus faible est donnée aux images complètes dont le pointeur est présent dans la mémoire 26 depuis moins d'une période T_{VSYNC}. Ce fonctionnement est illustré en figures 5 et 6.

La figure 5 illustre le décodage de deux demi-images I_{1T}, I_{1B} dont l'ordre de décodage est donné aux instants t₁₀₀ et t₂₀₀, et de deux images complètes I₂ et I₃ dont l'ordre de décodage est donné à l'instant t₁₀₀. Les pointeurs et les paramètres des images I_{1T}, I₂ et I₃ sont écrits dans la mémoire 26 avant l'instant t₁₀₀, et le pointeur de l'image I_{1B} avant l'instant t₂₀₀. Le circuit de gestion de priorité 30 donne la priorité de décodage la plus haute à la demi-image I_{1T}, et un niveau de priorité de décodage bas aux images I₂ et I₃. La demi-image I_{1T} est décodée en priorité, entre l'instant t₁₀₀ et un instant t₁₃₃ situé au tiers de l'intervalle t₁₀₀-t₂₀₀, puis une des deux images I2, I3, par exemple l'image I₂, est décodée entre l'instant t₁₃₃ et l'instant t₂₀₀. A l'instant t₂₀₀, la mémoire 26 contient ainsi les pointeurs de la demi-image I_{1B} et de l'image complète I₃. Le pointeur de l'image I₃ est dans la mémoire 26 depuis plus d'une période T_{VSYNC}, et le circuit 30 lui attribue la plus haute priorité de décodage. La demi-image I_{1B} reçoit la priorité la plus basse. L'image I₃ est décodée entre l'instant t₂₀₀ et un instant t₂₆₆ situé aux deux tiers de l'intervalle t₂₀₀-t₃₀₀. La demi-image I_{1B} est décodée entre l'instant t₂₆₆ et l'instant t₃₀₀. On notera que le dispositif selon la présente invention permet également de décoder en deux périodes T_{VSYNC}, deux images codées sous forme de demi-images et une image complète, uniquement des images codées sous forme de demi-image, ou uniquement des images codées sous forme d'images complètes. D'autres combinaisons de décodage, plus complexes, peuvent également être traitées par ce dispositif.

La figure 6 illustre une combinaison complexe de décodage dans laquelle l'ordre de décodage de deux demi-images I_{1T} et I_{1B} est donné aux instants t₁₀₀ et t₂₀₀, l'ordre de décodage de deux images complètes I₂ et I₃ est donné à l'instant t₂₀₀, l'ordre de décodage de deux demi-images I_{4T} et I₄B est donné aux instants t₃₀₀ et t₄₀₀, et l'ordre de décodage d'une image complète I₅ est donné à l'instant t₃₀₀. A l'instant t₁₀₀, la mémoire 26 ne contient que le pointeur de la demi-image I_{1T}, qui est décodée entre l'instant t₁₀₀ et l'instant t₁₃₃. A l'instant t₂₀₀, la mémoire 26 contient les pointeurs de la demi-image I_{1B} et ceux des images complètes I₂ et I₃. Le circuit de gestion de priorité attribue la priorité de décodage la plus haute à la demi-image I_{1B}, qui est décodée entre les instants t₂₀₀ et t₂₃₃. Les deux images complètes I₂ et I₃ ont alors une priorité de décodage basse, et l'une d'entre elle, par exemple l'image I₂, est décodée entre les instants t₂₃₃ et t₃₀₀. A l'instant t₃₀₀, la mémoire 26 contient les pointeurs de la demi-image I_{4T} et des images complètes I₃ et I₅. Le pointeur de l'image complète I₃ étant dans la mémoire 26 depuis plus d'une période T_{VSYNC}, le circuit de gestion de priorité donne la priorité de décodage la plus haute à l'image complète I₃. Une priorité de décodage inférieure est donnée à la demi-image I_{4T}, et la priorité de décodage la plus basse est donnée à l'image complète I₅. L'image complète I₃ est décodée entre l'instant t₃₀₀ et un instant t₃₆₆, situé aux deux tiers de l'intervalle t₃₀₀-t₄₀₀, et la demi-image I_{4T} est décodée entre l'instant t₃₆₆ et l'instant t₄₀₀. A l'instant t₄₀₀, la mémoire 26 contient les pointeurs de l'image complète I₅ et de la demi-image I_{4B}, et la priorité de décodage est donnée à l'image complète I₅. L'image I₅ est décodée entre l'instant t₄₀₀ et un instant t₄₆₆, et la demi-image I_{4B} est décodée entre l'instant t₄₆₆ et l'instant t₅₀₀.

On notera que la gestion de priorité selon la présente invention permet de toujours décoder une demi-image dans la période T_{VSYNC} qui suit son ordre de décodage, et de toujours décoder une image complète dans les deux périodes T_{VSYNC} qui suivent son ordre de décodage.

Dans le dispositif selon la présente invention, le décodeur 4 reçoit à la suite les données d'images à décoder de différentes séquences d'images, lues dans la mémoire 8. On a vu précédemment que le décodeur 4 est un décodeur MPEG classique. Dans un tel décodeur, dont la structure ne sera pas détaillée ici, le décodage d'une image se termine lorsque le décodeur détecte un code (PSC) marquant le début de l'image suivante. Ce code est défini par la norme MPEG. Ainsi, le décodeur 4 lit dans la mémoire 8 l'image qu'il décode jusqu'à ce qu'il détecte le code PSC de l'image suivante stockée dans la mémoire 8. Une telle image, classiquement l'image suivante de la séquence à laquelle appartient l'image décodée, est différente de l'image à décoder suivante, dont le pointeur se trouve dans la mémoire 26. Or, un décodeur MPEG classique comprend une zone mémoire tampon interne dans laquelle est contenue en permanence une partie des données de l'image décodée. Lors de la détection du code PSC indiquant la fin du décodage d'une image, cette zone mémoire comprend les dernières données de l'image décodée ainsi que des données parasites correspondant au code PSC et aux premières données de l'image suivante de la séquence. Cette zone mémoire ne peut être réinitialisée, ce qui fait que le décodeur 4 reçoit ces données parasites avant de recevoir les données de l'image à décoder suivante. Ces données commencent par un code PSC qui déclenche le décodage suivant.

La mise bout à bout des données parasites et du code PSC de l'image à décoder suivante est susceptible de prendre la forme d'un code PSC. Par exemple, si les codes PSC correspondent à une suite particulière de huit octets ayant respectivement les valeurs 00, 00, 00, 00, 00, 01, 00 et 00, et que les données parasites se terminent par six octets ayant respectivement les valeurs 00, 00, 00, 00, 00 et 01, la mise bout à bout des données parasites et du code PSC de l'image suivante sera la suite d'octets 00 00 00 00 00 01 00 00 00 00 00 01 00 00 et le décodeur identifiera les huit premiers octets de cette expression comme étant un code PSC. Dans un tel cas, le décodage de l'image suivante débutera trop tôt et le décodeur entrera dans un mode de fonctionnement erroné. La présente invention prévoit d'intercaler, entre la fin des données parasites et le code PSC de l'image à décoder suivante, un en-tête de sécurité supprimant tout risque de génération erronée d'un code PSC par la mise bout à bout des données parasites et du code PSC suivant. L'en-tête de sécurité peut être composé d'un octet codé à la valeur FF. Dans l'exemple précédent, la mise bout à bout des données parasites, de l'en-tête de sécurité et du code PSC est une suite d'octets
00 00 00 00 00 01 FF 00 00 00 00 00 01 00 00,
qui ne présente aucun risque d'identification erronée du code PSC.

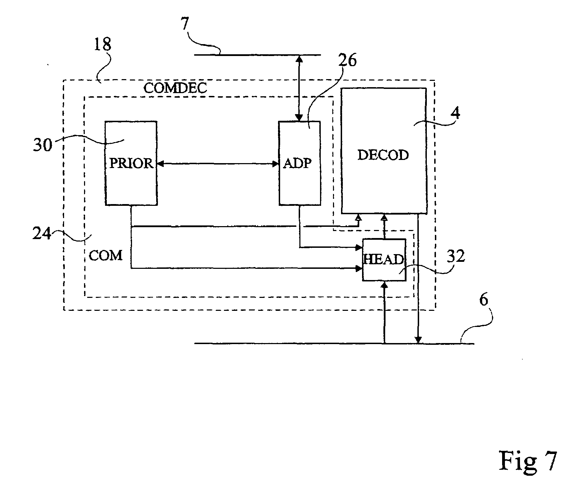

La figure 7 représente sous forme de blocs un circuit 18 tel que décrit en figure 4, comprenant un décodeur 4 et un circuit de commande 24, muni en outre d'un circuit 32 destiné à insérer un en-tête de sécurité et à accéder aux données d'image à la place du décodeur 4, selon les adresses fournies par la mémoire 26. Le circuit 32 est connecté entre le bus 6 et le décodeur 4. Il est en outre connecté à une sortie de commande de décodage fournie par le circuit 30, de manière à insérer l'en-tête avant les données fournies au décodeur 4 depuis le bus 6 au début de chaque décodage.

Bien entendu, la présente invention est susceptible de diverses variantes et modifications. En particulier, L'homme du métier adaptera sans difficultés la présente invention à un circuit de gestion de priorité qui accorde la priorité la plus haute aux demi-images, puis aux images complètes dont l'adresse de départ est contenue dans la mémoire 26 depuis plus d'une période T_{VSYNC}, puis aux images complètes dont l'adresse de départ est contenue dans la mémoire 26 depuis moins d'une période T_{VSYNC}. D'autre part, on a décrit le cas d'un dispositif permettant de décoder et d'afficher les images appartenant à trois séquences d'images différentes, mais l'homme du métier adaptera sans difficultés la présente invention à un dispositif permettant de décoder et d'afficher les images de deux séquences d'images, de quatre séquences d'images, ou plus. On a seulement décrit des cas dans lesquels chaque séquence comporte des images d'un même type, mais l'homme du métier adaptera sans difficultés la présente invention au cas dans lequel les séquences comportent des images de type différent. Enfin, on a seulement envisagé dans la description précédente le cas où toutes les images ont la même taille, et peuvent être décodées en une même durée. Cependant, l'homme du métier adaptera sans difficultés la présente invention à un cas où les images des différentes séquences ont des tailles respectives différentes (par exemple des images haute et basse résolution), et où les durées de décodage des images de chaque séquence ont des durées différentes.

## Revendications

1. Circuit de commande (24) d'un décodeur MPEG (4) cadencé par un signal de période donnée de balayage vertical d'écran (T_{VSYNC}) et susceptible de décoder plusieurs séquences d'images codées, recevant de ce circuit (24), à chaque début de période, une commande de décodage de plusieurs images d'un,premier ou d'un second type, les images du second type pouvant être décodées à un instant quelconque de la période qui suit leur commande de décodage, et les images du premier type pouvant être décodées à un instant quelconque des deux périodes qui suivent leur commande de décodage, ce circuit (24) comprenant un circuit d'attribution de priorité (30) pour, à chaque période, donner parmi ces images la priorité de décodage :
- s'il en existe, d'abord aux images du premier type n'ayant toujours pas été décodées une période après leur commande de décodage,
- sinon, s'il en existe, aux images du second type.

2. Circuit de commande d'un décodeur MPEG selon la revendication 1, comprenant en outre une mémoire de pointeurs (26) destinée à stocker les adresses de départ de chacune des images devant être affichées.

3. Circuit de commande d'un décodeur MPEG selon la revendication 1 ou 2, **caractérisé en ce qu'**il comprend en outre un circuit de sécurité (32) pour ajouter un en-tête prédéterminé avant chaque image fournie au décodeur de manière que deux images mises bout-à-bout ne puissent pas former un code qui entraîne un dysfonctionnement du décodeur.

4. Circuit de décodage à commande intégrée (18) comprenant un décodeur MPEG (4) connecté à un circuit de commande (24) selon la revendication 3.

5. Circuit de décodage et d'affichage d'images codées selon la norme MPEG (16) comprenant :
un circuit de décodage à commande intégrée (18) selon la revendication 4, relié à une mémoire (8) par l'intermédiaire d'un premier bus (6), de manière à lire des données codées et à écrire des données décodées dans ladite mémoire (8),
un circuit de contrôle d'affichage (20) connecté entre un écran (10) et le premier bus (6),
un microprocesseur (14) connecté à un second bus (7) de manière à commander le circuit de décodage à commande intégrée (18) et le circuit de contrôle d'affichage (20).

6. Circuit selon l'une quelconque des revendications précédentes, dans lequel les images du premier type sont des images entrelacées complètes, et les images du second type sont des demi-images entrelacées.

7. Circuit selon l'une quelconque des revendications 1 à 5, dans lequel les images du premier type sont des images entrelacées complètes, et les images du second type sont des demi-images entrelacées ou des images complètes non entrelacées.

## Claims

1. A circuit (24) for controlling an MPEG decoder (4) clocked by a signal of given period for vertical screen scanning (T_{VSYNC}) capable to decode several sequences of coded images, receiving from said circuit (24) at each period beginning an order to decode several images of a first or of a second type, the images of the second type being decodable at any instant of the period following their decoding order, and the images of the first type being decodable at any instant of the two periods following their decoding order, said circuit (24) including a priority assignment circuit (30) for, at each period, granting among these images the decoding priority:
- if there are any, first to the images of the first type that still have not been decoded one period after their decoding order,
- otherwise, if there are any, to the images of the second type.

2. The MPEG decoder control circuit of claim 1, further including a pointer memory (26) for storing the beginning addresses of each of the images to be displayed.

3. The MPEG decoder control circuit of claim 1 or 2, **characterized in that** it further includes a safety circuit (32) for adding a predetermined header before each image provided to the decoder so that two images put end to end cannot form a code that causes a malfunction of the decoder.

4. An integrated control decoding circuit (18) including an MPEG decoder (4) connected to the control circuit (24) of claim 3.

5. A circuit for decoding and displaying images coded according to standard MPEG (16), including:
the integrated control decoding circuit (18) of claim 4 connected to a memory (8) via a first bus (6), to read coded data from and to write decoded data into a memory (8),
a display control circuit (20) connected between a screen (10) and the first bus (6),
a microprocessor (14) connected to a second bus (7), to control the integrated control decoding circuit (18) and the display control circuit (20).

6. The circuit of any of the preceding claims, wherein the images of the first type are interlaced complete images, and the images of the second type are interlaced half-images.

7. The circuit of any of claims 1 to 5, wherein the images of the first type are interlaced complete images, and the images of the second type are interlaced half-images or non-interlaced complete images.

## Patentansprüche

1. Eine Schaltung (24) zum Steuern eines MPEG Decodierers (4), getaktet durch ein Signal mit einer bestimmten bzw. vorgegebenen Periode für ein vertikales Bildabtasten (T_{VSYNC}), geeignet zum Decodieren von mehreren Sequenzen von codierten Bildern, Empfangen von der Schaltung (24) bei jeder Periode beginnend bei einem Befehl zum Decodieren mehrerer Bilder von einem ersten oder von einem zweiten Typ, wobei die Bilder von dem zweiten Typ zu jedem Zeitpunkt von der Periode, folgend auf ihren Decodierbefehl, decodierbar sind und wobei die Bilder von dem ersten Typ zu jedem Zeitpunkt von den zwei Perioden, folgend auf ihren Decodierbefehl, decodierbar sind, wobei die Schaltung (24) eine Prioritätszuordnungsschaltung (30) beinhaltet um, bei jeder Periode, aus bzw. unter diesen Bildern die Decodierpriorität zu gewähren:
- falls es welche gibt, zuerst an die Bilder von dem ersten Typ, die eine Periode nach ihrem Decodierbefehl noch nicht decodiert worden sind,
- andernfalls, falls es welche gibt, an die Bilder von dem zweiten Typ.

2. Die MPEG Decodierersteuerschaltung nach Anspruch 1, die ferner einen Pointer-Speicher (26) beinhaltet zum Speichern der Anfangsadressen von jedem von den Bildern, die anzuzeigen sind.

3. Die MPEG Decodierersteuerschaltung nach Anspruch 1 oder 2, **dadurch gekennzeichnet, dass** sie ferner eine Sicherheitsschaltung (32) beinhaltet zum Addieren eines vorherbestimmten Kopfes vor jedes Bild, das für den Decodierer vorgesehen ist, so dass zwei Bilder die Ende an Ende zusammengefügt sind, nicht einen Code bilden können, der eine Fehlfunktion von dem Decodierer bewirkt.

4. Eine integrierte Steuerdecodierschaltung (18), die einen MPEG Decodierer (4) beinhaltet, der mit der Steuerschaltung (24) nach Anspruch 3, verbunden ist.

5. Eine Schaltung zum Decodieren und Anzeigen von Bildern, die gemäß einem Standard MPEG (16) codiert sind, wobei die Schaltung beinhaltet: die integrierte Steuerdecodierschaltung (18) nach Anspruch 4, verbunden mit einem Speicher (8) mit einem ersten Bus (6) zum Lesen codierter Daten von und zum Schreiben von decodierten Daten in einen Speicher (8),
eine Anzeigesteuerschaltung (20) verbunden zwischen einem Bildschirm (10) und dem ersten Bus (6),
einen Mikroprozessor (14), verbunden mit einem zweiten Bus (7), zum Steuern der integrierten Steuerdecodierschaltung (18) und der Anzeigesteuerschaltung (20).

6. Schaltung nach irgendeinem der vorhergehenden Ansprüche, wobei die Bilder von dem ersten Typ interlaced bzw. verschachtelte Vollbilder sind und die Bilder von dem zweiten Typ interlaced bzw. verschachtelte Halbbilder sind.

7. Schaltung nach irgendeinem der Ansprüche 1 bis 5, wobei die Bilder von dem ersten Typ interlaced bzw. verschachtelte Vollbilder sind und die Bilder von dem zweiten Typ interlaced bzw. verschachtelte Halbbilder oder nicht-verschachtelte Vollbilder sind.
